# EUROPEAN PATENT APPLICATION

(11) **EP 4 848 902 A1**
(43) Date of publication of application: **02.12.2026**
(21) Application number: 24919447.3
(22) Date of filing: 28.02.2024
(51) Int. Cl.: H05H 1/24, G21B 1/05

(54) **PLASMA GENERATION SYSTEM, AND NUCLEAR FUSION REACTION SYSTEM AND METHOD**

(30) Priority: 23.01.2024 CN 202410097267
(71) Applicant: Shanghai Startorus Fusion Technology Company Limited, Shanghai 201808 (CN)
(72) Inventor: TAN, Yi, Shanghai 201808 (CN); CHEN, Rui, Shanghai 201808 (CN)
(74) Representative: Isarpatent
(86) International application number: PCT/CN2024/079109
(87) International publication number: WO 2025/156354

(57) **Abstract**

A plasma generation system (10), and a nuclear fusion reaction system and method. The plasma generation system (10) comprises: a plasma generation assembly (101) and a motion assembly (102) connected to the plasma generation assembly (101), wherein the motion assembly (102) is configured to drive the plasma generation assembly (101) to move in a target direction; and the plasma generation assembly (101) is configured to emit plasma once same moves to a target position. The plasma generation system (10) can be used in a nuclear fusion reaction chamber (20) to generate a plasma ring therein, thereby reducing the difficulty in generating a plasma ring in the nuclear fusion reaction chamber (20), and thus improving the effect of a nuclear fusion reaction.

## Description

The present application claims priority to Chinese Patent Application No.202410097267.0, filed on January 23, 2024 and entitled "PLASMA GENERATION SYSTEM, AND NUCLEAR FUSION REACTION SYSTEM AND METHOD", the entire content of which is incorporated herein by reference.

### FIELD

The present application relates to the field of nuclear fusion technology, and in particular, to a plasma generating system, a nuclear fusion reaction system and a nuclear fusion reaction method.

### BACKGROUND

At present, nuclear fusion technology has been widely studied due to its advantages of producing a large number of clean energy by using low-cost materials.

A nuclear fusion reaction apparatus (e.g. a Tokamak apparatus) may use a central solenoid to generate a changing magnetic field, and in turn induces a toroidal electric field in a reaction chamber, which ionizes gas to produce a plasma. The plasma is heated to a fusion reaction temperature, and a fusion reaction takes place to release energy.

In this way, since a resistance of the gas is greater than that of a reaction chamber wall, a lot of energy may be absorbed by the reaction chamber wall in an electromagnetic induction process, resulting in a low energy utilization rate in a plasma excitation process, and high difficulty in plasma generating, affecting an effect of the nuclear fusion reaction.

### SUMMARY

In view of this, a plasma generating system, a nuclear fusion reaction system and a nuclear fusion reaction method are provided according to the present disclosure, the plasma generating system may be applied to a nuclear fusion reaction chamber to generate a plasma ring therein, thereby reducing the difficulty of generating a plasma in the nuclear fusion reaction chamber, thereby improving an effect of nuclear fusion reaction.

In an aspect of the present disclosure, a plasma generating system is provided, which includes: a plasma generating assembly and a moving assembly connected thereto. The moving assembly is configured to drive the plasma generating assembly to move in a target direction. The plasma generating assembly is configured to emit a plasma after moving to a target position.

In another aspect of the present disclosure, a nuclear fusion reaction system is provided, which includes: a reaction chamber and the above plasma generating system. The moving assembly in the plasma generating system is configured to drive the plasma generating assembly to move in the target direction. The plasma generating assembly is configured to inject a plasma into the reaction chamber after moving to a target position in the reaction chamber, to form a plasma ring in the reaction chamber to perform a fusion reaction.

In another aspect of the present disclosure, a nuclear fusion reaction method is provided, which is applied to the above nuclear fusion reaction system, where the nuclear fusion reaction system further includes a central solenoid and a poloidal magnetic field coil. The method includes:
driving, by the moving assembly, the plasma generating assembly to move to the target position in the reaction chamber along the target direction;
injecting, by the plasma generating assembly, a plasma into the reaction chamber to generate an initial plasma current ring in the reaction chamber;
electrifying the central solenoid to generate a main plasma current ring based on the initial plasma current ring; and
electrifying the poloidal magnetic field coil to drive the main plasma current ring to move and compress until a fusion condition is reached to generate a fusion reaction.

With the plasma generating system in the present disclosure, a moving assembly may drive a plasma generating assembly to move in a target direction, and the plasma generating assembly emits a plasma after moving to a target position. The plasma generating system may be applied to a nuclear fusion system to inject a plasma into a reaction chamber after the plasma generating assembly moves to a target position in the reaction chamber, to form a plasma ring in the reaction chamber, so that a nuclear fusion reaction chamber generates a plasma by ionizing gas without consuming extra energy, thereby reducing the difficulty of generating a plasma in the nuclear fusion reaction chamber, thus improving an effect of nuclear fusion reaction.

### BRIEF DESCRIPTION OF THE DRAWINGS

FIG. 1 is a schematic structural diagram of a plasma generating system according to an embodiment of the present disclosure;
FIG. 2 is a schematic structural diagram of a nuclear fusion reaction system according to an embodiment of the present disclosure;
FIG. 3 is a schematic structural diagram of another nuclear fusion reaction system according to an embodiment of the present disclosure;
FIG. 4 is a schematic structural diagram of another nuclear fusion reaction system according to an embodiment of the present disclosure;
FIG. 5 is a schematic structural diagram of another nuclear fusion reaction system according to an embodiment of the present disclosure;
FIG. 6 is a schematic structural diagram of a fusion nuclear reaction system according to another embodiment of the present disclosure;
FIG. 7 is a flow chart of a nuclear fusion reaction method according to an embodiment of the present disclosure; and
FIG. 8 is a flow chart of another nuclear fusion reaction method according to an embodiment of the present disclosure.

### DETAILED DESCRIPTION OF EMBODIMENTS

In the following description, numerous specific details are set forth in order to provide a thorough understanding of the present disclosure. However, the present disclosure may also be implemented in many other ways than those described herein, and those skilled in the art may make similar promotions without violating the meaning of the present disclosure, and therefore the present disclosure is not subject to the specific embodiments disclosed below.

Terms used in one or more embodiments of the present disclosure are intended only to describe specific embodiments and are not intended to limit one or more embodiments of the present disclosure. The terms "a", "the" and "this" in the singular form as used in one or more embodiments of the present disclosure and the claims are also intended to include the plural form unless the context clearly indicates otherwise. It should also be understood that the term "and/or" as used in one or more embodiments of the present disclosure refers to and encompasses any or all possible combinations of one or more related listed items. The term "at least one" in one or more embodiments of the present disclosure means "one or more" and "more" means "two or more". The term "include/comprise" is an non-exclusive description and should be understood to mean "including/comprising but not limited" and may include additional content in addition to what has been described.

It should be understood that although the terms "first", "second" and the like may be used to describe various information in one or more embodiments of the present disclosure, such information should not be limited to these terms. These terms are used only to distinguish the same type of information from one another. For example, without leaving the scope of one or more embodiments of the present disclosure, "first" may also be referred to as "second", and similarly, "second" may also be referred to as "first". Depending on the context, the word "if" as used here may be interpreted as "when..." or "in a case that..." or "respond to determination".

At present, nuclear fusion is considered to be an ideal choice to solve the energy problem of humans, a lot of clean energy may be provided through nuclear fusion reaction, and a wide range of fuel sources with low cost may be used for the nuclear fusion reaction. Accordingly, a nuclear fusion reaction apparatus has been widely studied, for example, the Tokamak apparatus is a kind of nuclear fusion reaction apparatus that has been studied extensively.

The Tokamak apparatus may use a central solenoid to generate a changing magnetic field, so as to induce a toroidal electric field in a reaction chamber, which ionizes the gas in the reaction chamber to generate a plasma. The Tokamak apparatus further generate magnetic fields by other magnets to constrain the plasma and control its motion, and heats the plasma to a fusion temperature to cause a nuclear fusion reaction. In this way, since a resistance of the gas is greater than that of a reaction chamber wall, a lot of energy would be absorbed by the reaction chamber wall in an electromagnetic induction process, resulting in a low energy utilization rate in a plasma excitation process.

In the conventional art, a filament may be used to generate a seed electron, and the electron collide with a gas-phase molecule to generate a plasma, but this method is suitable for generating the plasma in a low temperature environment. However, the reaction chamber of a nuclear fusion reaction scenario requires a high temperature, and the filament can not be provided inside the reaction chamber, so the plasma generated in this way is difficult to meet the requirements of the nuclear fusion reaction. In another method, gas is pre-ionized by microwave to generate the plasma, but a microwave system is often large and complex, and an energy utilization efficiency is still low.

A plasma generating system is provided according to an embodiment of the present disclosure, which may be applied to a nuclear fusion reaction scenario to carry out a pre-ionization of a plasma, to reduce difficulty of generating a plasma in the nuclear fusion reaction scenario, and may generate the plasma with a high energy utilization efficiency, ensuring a good effect of nuclear fusion reaction. The embodiment of the present disclosure further relates to a nuclear fusion reaction system and a nuclear fusion reaction method.

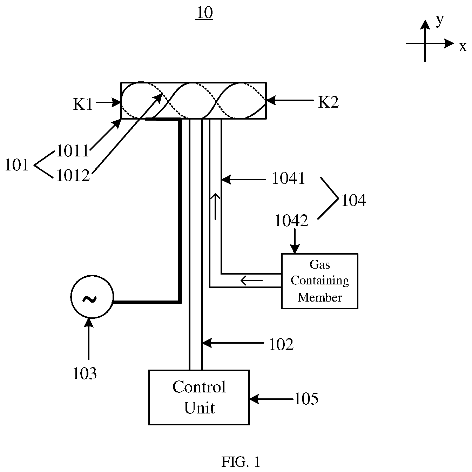

FIG. 1 is a schematic structural diagram of a plasma generating system according to an embodiment of the present disclosure. As shown in FIG. 1, the plasma generating system 10 includes: a plasma generating assembly 101 and a moving assembly 102 connected thereto. The moving assembly 102 may drive the plasma generating assembly 101 to move in a target direction. The plasma generating assembly 101 may emit a plasma after moving to a target position.

The plasma generating assembly 101 may be connected to a first end of the moving assembly 102, and a second end of the moving assembly 102 may be fixed at a certain position. The target direction is an arrangement direction of the plasma generating assembly 101 and the moving assembly 102, for example, a direction y in FIG. 1. A movement of the plasma generating assembly 101 in the target direction may also be referred to as an extension and retraction of the plasma generating assembly 101, and during this movement, the plasma generating assembly 101 may have an extended state and a retracted state. This state may be determined based on a relative position between the plasma generating assembly 101 and a second end of the moving assembly 102, for example, the retracted state of the plasma generating assembly 101 may be a state in which the plasma generating assembly 101 is close to the second end, and the extended state of the plasma generating assembly 101 may be a state in which the plasma generating assembly 101 is far away from the second end.

The plasma generating assembly 101 may emit the plasma after moving to a target position and may stop emitting the plasma when moving away from the target position (for example, in the retracted state). In some embodiments, the plasma generating assembly 101 may emit the plasma at a position other than the target position.

The plasma generating system 10 may be applied in a nuclear fusion reaction scenario. For example, the moving assembly 102 may drive the plasma generating assembly 101 to move to a target position in the nuclear fusion reaction chamber, and output the plasma into the nuclear fusion reaction chamber, so that a plasma ring may be formed in the nuclear fusion reaction chamber, which is convenient for a magnet in the nuclear fusion reaction apparatus to perform subsequent confinement and control on the plasma, realizing a nuclear fusion reaction. The plasma generating system may simply and efficiently generate the plasma in the nuclear fusion reaction chamber, so that the nuclear fusion reaction chamber generates the plasma by ionizing gas without consuming extra energy, thereby reducing the difficulty of generating the plasma in the nuclear fusion reaction scenario, thus improving an effect of nuclear fusion reaction.

In some embodiments, after the plasma ring is formed in the nuclear fusion reaction chamber, the moving assembly 102 may drive the plasma generating assembly 101 to leave the nuclear fusion reaction chamber, so that the plasma generating assembly 101 can be prevented from affecting a subsequent plasma control process, and the plasma generating assembly 101 can be prevented from being damaged by the heat generated during a plasma control process.

In the embodiment of the present disclosure, the plasma generating system 10 may also be applied to generate a plasma in other scenarios other than the nuclear fusion reaction, which is not limited herein.

Continually referring to FIG. 1, the plasma generating assembly 101 may include a plasma chamber 1011 having a hollow structure in which the plasma generating assembly 101 may generate a plasma. Opposite ends of the plasma chamber 1011 (for example, two ends K1 and K2 in FIG. 1) may be provided with openings. The plasma generated in the plasma chamber 1011 may be output from openings at both ends thereof, thereby forming the plasma ring.

The plasma chamber 1011 in the plasma generating assembly 101 may have a tubular structure. As shown in FIG. 1, the plasma chamber 1011 may have a straight tubular structure, or the plasma chamber may have an arc-shaped tubular structure. In some embodiments, the plasma chamber 1011 may be a round tube, a square tube, or other style of tubular structure.

The plasma chamber 1011 may be made of an insulating material such as quartz or glass. A volume of the plasma chamber 1011 is small, and the plasma chamber 1011 may have a diameter ranging from 3 cm to 5 cm and a length ranging from 6 cm to 9 cm. For example, the plasma chamber 1011 has a diameter of 4 cm and a length of 8 cm. The diameter and length of the plasma chamber 1011 may be positively related to a volume of a target apparatus (for example, a reaction chamber of a nuclear fusion reaction apparatus) requiring a plasma, and the diameter and length of this plasma chamber 1011 may be adjusted accordingly for different target apparatus.

Continually referring to FIG. 1, the plasma generating system 10 may further include a gas injection assembly 104. The gas injection assembly 104 is connected to the plasma chamber 1011 for injecting working gas into the plasma chamber 1011. In a case that the working gas is broken down by the energy, the plasma may be generated in the plasma chamber 1011. For example, the working gas may include hydrogen or deuterium.

In some embodiments, in addition to the above opposite ends K1 and K2 provided with openings, a third end may protrude between these opposite ends on the plasma chamber 1011, and the third end is also provided with an opening for injecting the working gas required for generating the plasma, for example, the third end communicates with the gas injection assembly 104. In some embodiments, the plasma chamber 1011 may also be provided with only a gas injection port between the two opposite ends without a protruding structure.

The gas injection assembly 104 may include: an injection pipe 1041 and a gas containing member 1042, both ends of the injection pipe 1041 are connected to the plasma chamber 1011 and the gas containing member 1042, respectively. The injection pipe 1041 may communicate with an inner space of the plasma chamber 1011. The gas containing member 1042 is configured to contain the working gas, which is injected into the plasma chamber 1011 via the injection pipe 1041. The gas containing member 1042 may be a gas cylinder.

The gas injection assembly 104 may further include a valve (not shown in the drawings). The valve is arranged between the plasma chamber 1011 and the gas containing member 1042, e.g. on the injection pipe 1041, or at a position where the injection pipe 1041 is connected to the gas containing member 1042. When the valve 1041 is open, the working gas in the gas containing member 1042 is injected into the plasma chamber 1011 via the injection pipe 1041.

A density of the plasma excited in the plasma chamber 1011 may be positively correlated with a gas pressure in the plasma chamber 1011. In the embodiment of the present disclosure, an amount and rate of the gas injected into that plasma chamber 1011 by the gas injection assembly 1011 may be determined based on a required plasma density.

In the embodiment of the present disclosure, after the working gas is injected into the plasma chamber 1011, the gas pressure in the plasma chamber 1011 is, for example, on an order of 1 Pa to 10 Pa, which is sufficient for generating a required plasma. When the nuclear fusion reaction takes place, the nuclear fusion reaction chamber needs to maintain a vacuum state, in which the gas pressure is maintained at about 1E-5 Pa. The volume of the plasma chamber 1011 is small and the gas contained therein is also small, and even if the working gas in the plasma chamber 1011 is completely diffused into the nuclear fusion reaction chamber, an overall gas pressure in the nuclear fusion reaction chamber would reach only 1E-3 Pa, which is still within a working gas pressure range in which the nuclear fusion reaction may be normally realized. Therefore, an influence of the working gas on the state of the nuclear fusion reaction chamber may be avoided, thereby ensuring a normal operation of the nuclear fusion reaction.

The plasma generating assembly 101 in the embodiment of the present disclosure may have a structure formed in any way of generating the plasma, and accordingly, there may be many ways of generating the plasma in the plasma chamber 1011. In one method, the plasma may be generated in the plasma chamber 1011 by applying a voltage between a cathode sheet and an anode sheet. In another aspect, the plasma generating assembly 101 may be a helical wave plasma source that generates a helical wave plasma in the plasma chamber 1011. Next, the plasma generating assembly 101 and other components in the plasma generating system 10 are described in detail in this manner with reference to FIG. 1.

Continually referring to FIG. 1, the plasma generating assembly 101 may further include a helical wave antenna 1012. The helical wave antenna 1012 surrounds an inner space of the plasma chamber 1011. The helical wave antenna 1012 may generate a helical wave in the plasma chamber 1011 to inject energy into the plasma chamber 1011 based on the helical wave. The gas in the plasma chamber 1011 may be ionized by this energy (e.g. by broking down the working gas injected by the gas injection assembly 104), so that the plasma (which may be referred to as a helical wave plasma) can be generated in the plasma chamber 1011. The helical wave plasma may be generated with a high density and a high efficiency, and the energy of the plasma may be controlled by controlling the helical wave antenna, so that the plasma with a high quality may be obtained by using this plasma generating assembly 101, thereby improving the effect of the nuclear fusion reaction.

Continually referring to FIG. 1, the plasma generating system 101 may further include an energy source, and the helical wave antenna 1012 is connected to the energy source, the energy source transmits energy (for example, a current under a certain condition) to the helical wave antenna 1012. The helical wave antenna 1012 couples the received energy and feeds it into the inner space of the plasma chamber 1011. The density of the plasma excited in the plasma chamber 1011 may be positively correlated with a power of the energy source. The power of the energy source in the embodiment of the present disclosure may be determined based on the required plasma density.

For example, continually referring to FIG. 1, the energy source in the plasma generating system 10 may be a radio frequency wave source 103 for emitting a radio frequency wave. The radio frequency wave source 103 transmits radio frequency wave energy to the helical wave antenna 1012, and the helical wave antenna 1012 couples the received radio frequency wave energy to the helical wave emitted therefrom, so that the helical wave with the energy ionizes the gas in the inner space of the plasma chamber 1011 to generate the plasma. In some embodiments, the energy source may also be a microwave source, or may be other energy source that excites the helical wave antenna to generate a helical wave.

In the embodiment of the present disclosure, the energy transmitted from the radio frequency wave source 103 to the helical wave antenna may be controlled by adjusting parameters of the radio frequency wave source 103, so as to control the plasma energy obtained by excitation. A parameter modulation range of the radio frequency wave source 103 may be wide, thereby realizing sufficient control of the plasma.

In the embodiment of the present disclosure, it is only required to ensure that the helical wave antenna 1012 surrounds the inner space of the plasma chamber 1011, so that energy may be injected into the inner space. In an embodiment, the helical wave antenna 1012 may be placed outside the plasma chamber 1011, and surround an entire plasma chamber 1011. In an embodiment, the helical wave antenna 1012 may also be embedded in a wall of the plasma chamber 1011.

As shown in FIG. 1, the helical wave antenna 1012 is helically and uniformly wound around the plasma chamber 1011. Portions of the helical wave antenna 1012 indicated by dotted lines in FIG. 1 refer to the portions which are blocked by the plasma chamber 1011 in FIG. 1. The helical wave antenna 1012 may also be wound in a way different from that shown in FIG. 1, as long as it can be ensured that the helical wave antenna 1012 may emit a helical wave that meets the requirements. For example, the helical wave antenna 1012 may not be wound uniformly on the plasma chamber 1011, or a number of windings on the plasma chamber 1011 may be more or less than in FIG. 1.

In the embodiment of the present disclosure, the plasma generating assembly 101, the radio frequency wave source 103, and the gas injection assembly 104 may together constitute a plasma generator, and the plasma generator may also independently generate the plasma. In some embodiments, the plasma generating system 10 may not include the radio frequency wave source 103 and/or the gas injection assembly 104.

For the above plasma generating assembly 101, the moving assembly 102 may be connected to the plasma chamber 1011. Continually referring to FIG. 1, the moving assembly 102 may drive the plasma chamber 1011 to move in the target direction, and the target direction (for example, the direction y in FIG. 1) may intersect with the arrangement direction (for example, a direction x in FIG. 1) of the opposite ends of the plasma chamber 1011. The arrangement direction of the opposite ends of the plasma chamber 1011 may be a length direction of the plasma chamber 1011. For example, the target direction is perpendicular to the arrangement direction of these opposite ends.

The moving assembly 102 may be connected to a portion between the opposite ends of the plasma chamber 1011. For example, the moving assembly is connected to a middle region of the plasma chamber 1011, and the plasma generating system 10 may have a T-shaped structure. Positions where the injection pipe 1041 in the gas injection assembly 104 and the moving assembly 102 are connected in the plasma chamber 1011 may be staggered from each other. The moving assembly 102 and the plasma chamber 1011 may be an integrated structure, or the moving assembly 102 may be clamped or screwed with the plasma chamber 1011. FIG. 1 takes the moving assembly 102 in a long strip shape as an example, a cross section of the moving assembly 102 may be a circle, a square or any other shapes, which is not limited herein. The moving assembly 102 may also be in a plate shape or in other shapes.

In an embodiment, the moving assembly 102 may have an extendable structure. For example, the moving assembly 102 may include multiple articulated moving sections, each of which may be folded and unfolded in a rotational motion to adjust an overall length of the moving assembly 102 in the target direction. In another example, the moving assembly 102 may include multiple moving portions of different diameters connected in sequence, and each moving portion may extend and retract in the target direction to adjust the overall length of the moving assembly 102 in the target direction. In the two adjacent moving portions with different diameters, a moving portion with a larger diameter may have a hollow structure, and a moving portion with a smaller diameter may be retracted in the moving portion with the larger diameter.

In another embodiment, the moving assembly 102 may be a fixed structure, and the moving assembly 102 may move in the target direction as a whole to drive the plasma chamber 1011 to move in the target direction accordingly. For example, the moving assembly 102 includes a connected base and a moving portion, where a position of the base is fixed, and one end of the moving portion is connected to the plasma generating assembly 101. The moving portion may move in the target direction relative to the base, so as drive the plasma generating assembly 101 to move in the target direction. In another example, the moving assembly 102 includes a connecting rod and a clamping groove, partial area of the connecting rod is arranged in the clamping groove, the connecting rod may move in the clamping groove, and one end of the connecting rod is connected to the plasma generating assembly 101. The connecting rod may be moved in the target direction relative to the clamping groove, so as drive the plasma generating assembly 101 to move in the target direction.

In the embodiment of the present disclosure, a maximum extending distance of the moving assembly 102 in the target direction may be up to 10 cm. This maximum extending distance may be adjusted according to actual requirements, for example, this maximum extending distance may also reach 20 cm or even longer, which is not limited here. A moving speed of the moving assembly 102 may reach 20 meters per second (m/s), so that the plasma chamber 1011 may achieve a displacement of 10 cm within 5 milliseconds, which is convenient for a rapid control of the plasma generating assembly 101. The movement speed of the moving assembly 102 may also be 15 m/s, 30 m/s, or other speeds, which are not limited herein.

In the embodiment of the present disclosure, a connecting line between the helical wave antenna 1012 and the radio frequency wave source 103 may be flexible, and the injection pipe 1041 in the gas injection assembly 104 may also be flexible. In this way, when the plasma chamber 1011 moves, the connecting line and the injection pipe 1041 may be prevented from limiting a displacement of the plasma chamber 1011, ensuring an operating reliability of the plasma generating system 10.

Continually referring to FIG. 1, the plasma generating system 10 may further include a control unit 105. The control unit 105 may be connected to the radio frequency wave source 103, the gas injection assembly 104 and the moving assembly 102, and this connection may be a communication connection or a direct connection via a wire. FIG. 1 only shows a connection relationship between the control unit 105 and the moving assembly 102, and connection relationship between the control unit 105 and the radio frequency wave source 103 and the gas injection assembly 104 is not shown herein.

The control unit 105 may transmit radio frequency wave energy to the helical wave antenna 1012 by controlling the radio frequency wave source 103, so that the helical wave antenna 1012 injects energy into the plasma chamber 1011, thereby controlling the plasma generating assembly 101 to emit the plasma. The control unit 105 may be connected to a valve in the gas injection assembly 104 to control the opening and closing of the valve, thereby realizing the control of injecting the working gas into the plasma chamber 1011.

For other types of plasma generating assemblies 101, the control unit 105 may also be directly connected to the plasma generating assembly 101 to directly control the plasma generating assembly 101 to emit the plasma.

To sum up, in the plasma generating system according to the present disclosure, a moving assembly may drive a plasma generating assembly to move in a target direction, and the plasma generating assembly emits a plasma after moving to a target position. The plasma generating system may be applied to a nuclear fusion system to inject a plasma into a reaction chamber in a case that the plasma generating assembly moves to a target position in the reaction chamber, to form a plasma ring in the reaction chamber, so that a nuclear fusion reaction chamber generates a plasma by ionizing gas without consuming extra energy, thereby reducing difficulty of generating a plasma in the nuclear fusion reaction chamber, thus improving an effect of nuclear fusion reaction.

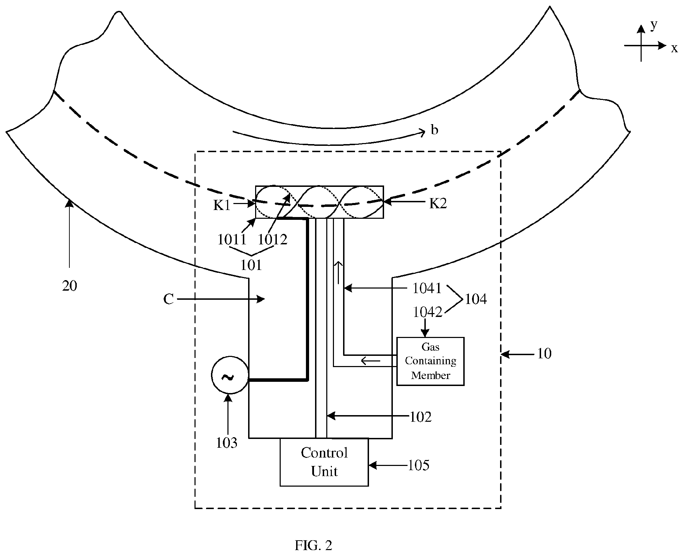

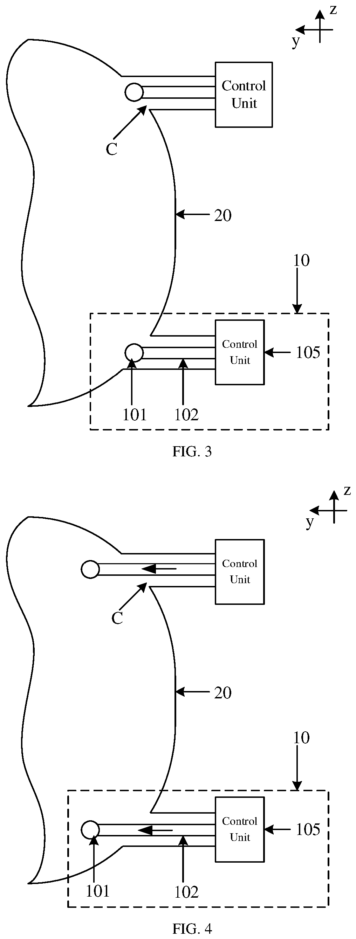

FIG. 2 is a schematic structural diagram of a nuclear fusion reaction system according to an embodiment of the present disclosure, and FIG. 3 is a schematic structural diagram of another nuclear fusion reaction system according to an embodiment of the present disclosure. FIG. 2 may be a schematic view of a cross section of the nuclear fusion reaction system, and FIG. 3 may be a schematic view of a longitudinal section of the nuclear fusion reaction system. As shown in FIG. 2 and FIG. 3, the nuclear fusion reaction system may include a reaction chamber 20 and the above plasma generating system 10, and the reaction chamber 20 is annular. FIG. 2 and FIG. 3 illustrate only partial area of the reaction chamber 20. The reaction chamber 20 may also be referred to as a vacuum chamber because the reaction chamber 20 is generally required to be in a vacuum state when the nuclear fusion reaction is performed.

The moving assembly 102 in the plasma generating system 10 may drive the plasma generating assembly 101 to move in a target direction, for example, the plasma generating assembly 101 may be moved to a target position in the reaction chamber 20. In this case, the plasma generating assembly 101 may generate a plasma, which may enter the reaction chamber 20 to form a plasma ring in the reaction chamber 20, and subsequently perform a fusion reaction based on this plasma ring. For example, the plasma generating assembly 101 includes a plasma chamber 1011 and a helical wave antenna 1012. The plasma generating assembly 101 may be moved into the reaction chamber 20 such that the plasma generated in the plasma chamber 1011 enters the reaction chamber 20.

In an embodiment, the plasma generating assembly 101 may be fixedly provided in the reaction chamber 20. In another embodiment, the plasma generating assembly 101 moves into the reaction chamber 20 only at certain times. For example, after an initial plasma current ring is formed, the plasma generating assembly 101 may be moved out of the reaction chamber 20, so as to prevent the plasma generating assembly 101 affecting a subsequent plasma control process, and further to prevent the plasma generating assembly 101 from being damaged by the heat generated during a plasma control process.

The nuclear fusion reaction system may include multiple toroidal magnetic field coils longitudinally surrounding the reaction chamber 20, which may generate a toroidal magnetic field in the reaction chamber 20. For example, a direction b in FIG. 2 represents a toroidal magnetic field direction. Under an action of this toroidal magnetic field, the plasma entering the reaction chamber 20 from the plasma chamber 1011 may form an initial plasma current ring. The initial plasma current ring is shown in FIG. 2 as an arc with a dashed line. The initial plasma current ring may reduce a resistance of the gas in the reaction chamber 20 so that the gas in the reaction chamber 20 is more easily broken down.

The nuclear fusion reaction system may further include a central solenoid and a poloidal magnetic field coil. The reaction chamber 20 surrounds the central solenoid, which may be provided along a central axis of the reaction chamber 20. The poloidal magnetic field coil may be arranged at a periphery of the reaction chamber 20 to laterally surround the reaction chamber 20. The central solenoid and the poloidal magnetic field coil may respectively generate a magnetic field. The magnetic field generated by the central solenoid may induce an electric field in a toroidal direction of the reaction chamber 20, which further ionizes the gas with a reduced resistance in the reaction chamber 20 to form a main plasma current ring. A current value of the main plasma current ring may be higher than a current value of the initial plasma current ring. The magnetic field generated by the poloidal magnetic field coil may push the main plasma current ring to move and compress until a fusion condition is reached (for example, the plasma is heated to a fusion reaction temperature) to generate fusion reaction.

As shown in FIG. 2, in a case that the plasma generating assembly 101 is moved into the reaction chamber 20 (for example, moved to the target position in the reaction chamber 20), the arrangement direction (for example, a direction x in FIG. 2) of the opposite ends K1 and K2 provided with the openings in the plasma chamber 1011 intersects both a radial direction (for example, a direction y in FIG. 2) and an axial direction (for example, a direction z in FIG. 3) of the reaction chamber 20. For example, the arrangement direction may be perpendicular to the radial direction and the axial direction of the reaction chamber 20. In this way, the plasma outputted from the openings of the plasma chamber 1011 may be directly distributed in the direction of the toroidal magnetic field, so that a plasma current ring transmitted along the direction of the toroidal magnetic field can be more efficiently formed under the action of the toroidal magnetic field.

The plasma generating assembly 101 may be moved in the radial direction to a middle region in the reaction chamber 20, for example, the target position is arranged in the middle region. The middle region in the embodiment of the present disclosure may refer to a region where a middle point in a ring width of the reaction chamber 20 is arranged in the radial direction. In this way, the plasma outputted from the opening of the plasma chamber 1011 may be directly arranged in the middle region, and it is unnecessary to additionally adjust the position of the plasma in the radial direction, facilitating a formation of a plasma current ring meeting the requirements.

In the embodiment of the present disclosure, the plasma is generated by the plasma chamber 1011 with a small volume in the nuclear fusion reaction system. In an embodiment, the plasma chamber 1011 is a circular tube having a diameter of 4 cm and a length of 8 cm, and a volume of 32π cm³. The initial plasma current ring has a radius of 0.5 m, a cross-sectional area of 4π cm², and a volume of about 400π2 cm³. A volume ratio of the two is about 1/40, and a working gas pressure of the helical wave plasma is about 1 Pa, so a gas pressure subjected by the plasma after entering the reaction chamber 20 is about 0.025 Pa, which meets a requirement of breaking down the gas for discharging in the fusion reaction system.

As shown in FIG. 3, the nuclear fusion reaction system may include two plasma generating systems 10 which are respectively arranged at a top and a bottom of the reaction chamber 20. Specific positions of the plasma generating system 10 at the top and the bottom of the reaction chamber 20 may be determined based on the position of a required initial plasma current ring. For example, the plasma generating system 10 arranged at the top of the reaction chamber 20 may be arranged at one third of a height in an upper part of the reaction chamber 20, or may be arranged at one half or one quarter of the height, which is not limited herein.

The two plasma generating systems 10 may be aligned in the axial direction of the reaction chamber 20. As shown in FIG. 3, orthographic projections of the two plasma generating systems 10 on a reference plane, which may be a plane perpendicular to the z axis, may coincide. In some embodiments, the two plasma generating systems 10 may be staggered, e.g. arranged on different sides of the reaction chamber 20, respectively.

This nuclear fusion reaction system may be configured for multi-stroke merging-compression-fusion. Under an action of the two plasma generating systems 10, two local and complete initial plasma current rings may be formed at the top and the bottom of the reaction chamber 20, respectively. Base on the initial plasma current rings, two main plasma current rings may be induced and generated at that top and bottom of the reaction chamber 20. The poloidal magnetic field may push these two main plasma current rings to move towards an equatorial plane of the reaction chamber 20, so that the two main plasma current rings are merged into one plasma current ring on the equatorial plane, which are to be further compressed to reach a fusion condition to generate a fusion reaction. This is a one-stroke merging-compression-fusion, after which each coil current may be reduced to zero and the plasma would dissipate. This process may be repeated to achieve the multi-stroke merging-compression-fusion.

FIG. 3 takes the two plasma generating systems 10 each including a control unit 105 as an example. In some embodiments, the two plasma generating systems 10 may share a control unit 105.

Continually referring to FIG. 2 and FIG. 3, a side wall of the reaction chamber 20 may be provided with a window C to facilitate the plasma generating assembly 101 to enter an inner space of the reaction chamber 20 under the driving of the moving assembly 102. At least part of the structure of the moving assembly 102 in the plasma generating system 10 may be arranged outside the window C (i.e. a side of the window C away from an inner space of the reaction chamber 102), and drives the plasma generating assembly 101 to move in the target direction, so that the plasma generating assembly 101 is switched between a first state and a second state. The window C is arranged in the target direction, and the plasma generating assembly 101 is arranged outside the window C in the first state and moves through the window C to the target position in the reaction chamber 20 in the second state.

FIG. 2 shows a situation where the plasma generating assembly 101 is in the second state, and FIG. 3 shows a situation where the plasma generating assembly 101 is in the first state. As shown in FIG. 3, in the first state, the plasma generating assembly 101 may be arranged at an edge of the window C, substantially flush with the wall of the reaction chamber 20. In some embodiments, the plasma generating assembly 101 may be closer to the outside of the window C in the first state relative to the illustration of FIG. 3. The first state may be an initial state and a normal state of the plasma generating assembly 101, and the plasma generating assembly 101 is switched to the second state when it is required to output the plasma to the reaction chamber 20, and then switched back to the first state.

In some embodiments, a shape and a size of the window C may be set based on a shape and a size of the plasma generating assembly 101. For example, the shape of the window C may be a rectangle, a trapezoid, or any other shapes through which the plasma generating assembly 101 may freely pass.

In some embodiments, the edge of the window C may be provided with a sealing assembly which may be opened and closed. The sealing assembly may be closed to cover the window C when the plasma generating assembly 101 is in the first state, so as to further isolate the plasma generating assembly 101 from the inner space of the reaction chamber 20, thereby avoiding a damage of the nuclear fusion reaction to the plasma generating assembly 101.

In the embodiment of the present disclosure, in order to supply power to the magnet in the nuclear fusion reaction system, the control unit 105 may control the movement of the moving assembly 102 to drive the plasma generating assembly 101 to move into the reaction chamber 20 through the window C, that is, the plasma generating assembly 101 changes from the first state to the second state. FIG. 4 is a schematic structural diagram of another nuclear fusion reaction system according to an embodiment of the present disclosure. The control unit 105 may control the movement of the moving assembly 102 to switch the plasma generating assembly 101 from the state shown in FIG. 3 to the state shown in FIG. 4. Arrows in the moving assembly 102 of FIG. 4 are used to indicate a motion direction of the moving assembly 102.

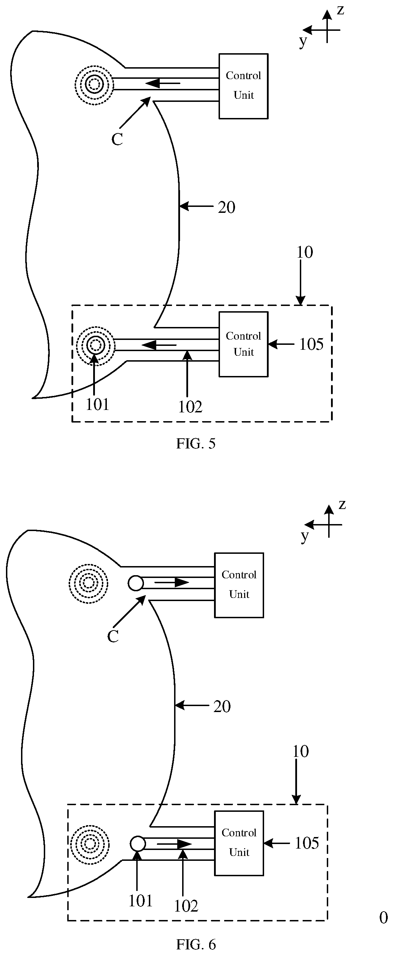

Next, the plasma generating assembly 101 may be controlled to inject the plasma into the reaction chamber 20. For example, the gas injection assembly 104 is controlled to inject the working gas into the plasma chamber 1011, and the radio frequency wave source 10 3 is controlled to transmit the radio frequency wave energy to the helical wave antenna 1012, so that the helical wave antenna 1012 feeds the radio frequency energy into the plasma chamber 1011 to ionize the working gas to generate the helical wave plasma. The helical wave plasma is discharged from the openings at both ends of the plasma chamber 1011 to the reaction chamber 20, to form a toroidal initial plasma current. FIG. 5 is a schematic structural diagram of another nuclear fusion reaction system according to an embodiment of the present disclosure. As shown in FIG. 5, the toroidal initial plasma current may be formed at the plasma chamber 1011 in the reaction chamber 20, where concentric circles indicated by dashed lines represent the initial plasma current.

FIG. 6 is a schematic structural diagram of a nuclear fusion reaction system according to another embodiment of the present disclosure. As shown in FIG. 6, after the initial plasma current is formed in the reaction chamber 20, the control unit 105 may control the movement of the moving assembly 102 again to drive the plasma generating assembly 101 to move out of the reaction chamber 20 through the window C, that is, the plasma generating assembly 101 switches from the second state to the first state. After the initial plasma current is formed, the plasma generating assembly 101 may stop emitting the plasma. For example, the control unit 105 may control the gas injection assembly 104 to stop injecting the working gas into the plasma chamber 1011, and control the radio frequency wave source 103 to stop transmitting the radio frequency wave energy to the helical wave antenna 1012.

The initial plasma current may then be controlled. For example, after the plasma generating assembly 101 leaving the target position, the initial plasma current may be controlled to reduce the risk of the plasma diffusing and disappearing. Alternatively, the initial plasma current may be controlled in a case that the plasma generating assembly 101 is moved to the outside of the reaction chamber 20. For the control of the initial plasma current, reference may be made to the relevant description to the central solenoid and the poloidal magnetic field coil, which would not be repeated herein.

In the nuclear fusion reaction system according to the embodiment of the present disclosure, a pre-ionization of the plasma is carried out by adopting the helical wave, so that a high-density plasma may be efficiently obtained; and the plasma and a magnet in the nuclear fusion reaction system may be independently controlled respectively, and the plasma may be sufficiently controlled.

Since the helical wave requires a high working voltage, if the way of the helical wave forming plasma is directly applied to the nuclear fusion plasma system, a large helical wave antenna is usually installed in the reaction chamber. Therefore, the whole reaction chamber would be in a high voltage when the helical wave beaks down the gas, so that a discharge component in the nuclear fusion reaction system can not discharge normally, which is not compatible with the discharge component in the nuclear fusion reaction system. In the embodiment of the present disclosure, with the plasma generating system, a local high gas pressure is formed in a small glass tube, and the gas is broken down by using a helical wave, to generate the plasma in a large-volume reaction chamber. In this way, the whole reaction chamber may be prevented from operating at a high gas pressure, thereby avoiding an influence on the discharge component in the nuclear fusion reaction system.

If the helical wave is directly transmitted into the reaction chamber, the plasma will be generated in a large space from top to bottom in the reaction chamber, and it is difficult to generate a complete plasma current ring in a local area. The plasma generating system adopted in the embodiment of the present disclosure includes a plasma chamber with openings at both ends and a helical wave antenna nested outside, so that the helical wave plasma generated in the plasma chamber can quickly enter the reaction chamber through the two ends, thereby locally forming the complete plasma current ring. This method is very suitable for a double-ring merging-compression-fusion reaction system to generate two local and complete plasma current rings at the top and the bottom of the reaction chamber.

If the plasma generating assembly is directly provided inside the reaction chamber, in a case that a high-temperature plasma is generated in the reaction chamber, the plasma generating assembly (for example, the helical wave antenna therein) may affect a subsequent discharge process (for example, causing the plasma to break), and the high-temperature plasma may also damage the helical wave antenna. The plasma generating system adopted in the embodiment of the present disclosure includes a moving assembly capable of expansion and contraction, and the plasma generating assembly may be driven to enter the reaction chamber before the discharge component starts to discharge to generate the initial plasma current ring, then quickly leave the plasma area, and enter again during next discharge. The moving speed of the moving assembly is fast, for example, a reciprocating motion process of 10 cm may be completed within 5 milliseconds, which is far less than the discharge time of the discharge component in the nuclear fusion reaction system, so that the influence on the discharge process is small, thereby avoiding the influence on other working processes while ensuring efficient generation of plasma. This method is suitable for multi-stroke fusion reactors where the plasma needs to be periodically generated and dissipated.

To sum up, in the nuclear fusion reaction system according to the embodiment of the present disclosure, a plasma generating system is adopted to generate a plasma, where the moving assembly drives the plasma generating assembly to move in a target direction, and the plasma generating assembly emits a plasma after moving to a target position in the reaction chamber. In this way, the plasma is injected into the reaction chamber, to form a plasma ring in the reaction chamber, so that the nuclear fusion reaction chamber generates the plasma by ionizing gas without consuming extra energy, thereby reducing the difficulty of generating the plasma in the nuclear fusion reaction chamber, thus improving the effect of fusion reaction. In addition, after the plasma ring is generated, the moving assembly may drive the plasma generating assembly to move outside the reaction chamber, so that an influence of the plasma generating assembly on the nuclear fusion reaction process can be avoided, and a damage of the nuclear fusion reaction process to the plasma generating assembly can be avoided.

A nuclear fusion reaction method is further provided according to the embodiment of the present disclosure, which may be applied to the nuclear fusion reaction system shown in any one of FIG. 2 to FIG. 6, and may be performed by a control unit operated by an operator. The nuclear fusion reaction method may be referenced to the aforementioned working process of the plasma generating system and the process of performing the nuclear fusion reaction, and will not be described in detail below.

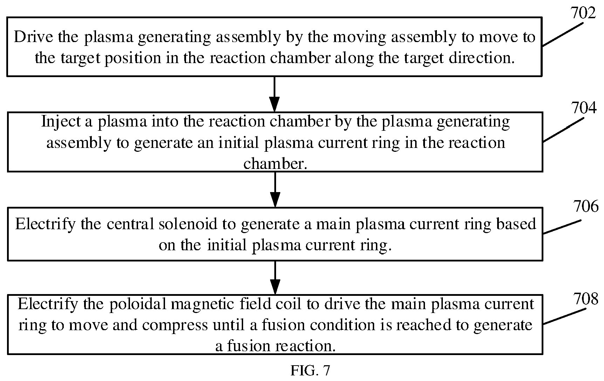

FIG. 7 is a flow chart of a nuclear fusion reaction method according to an embodiment of the present disclosure. As shown in FIG. 7, the method may include the following steps 702 to 708.

In step 702, the plasma generating assembly is driven by the moving assembly to move to the target position in the reaction chamber along the target direction.

The plasma generating assembly of the plasma generating system may be kept in the reaction chamber, or the plasma generating assembly of the plasma generating system may be controlled by the control unit in the nuclear fusion reaction system to move from outside the reaction chamber into the reaction chamber, then step 702 is performed. For example, the control unit may be a control unit in the plasma generating system.

In step 704, a plasma is injected into the reaction chamber by the plasma generating assembly to generate an initial plasma current ring in the reaction chamber.

The control unit may control the plasma generating assembly to generate the plasma and inject the plasma into the reaction chamber, to generate an initial plasma current ring in the reaction chamber.

In step 706, the central solenoid is electrified to generate a main plasma current ring based on the initial plasma current ring.

The control unit may control a power supply module of the central solenoid to supply power to the central solenoid, so that a magnetic field is generated in the reaction chamber, and a main plasma current ring is generated on the basis of an initial plasma current ring under the action of the magnetic field.

In step 708, the poloidal magnetic field coil is electrified to drive the main plasma current ring to move and compress until a fusion condition is reached to generate a fusion reaction.

The control unit may control a power supply module of the poloidal magnetic field coil to supply power to the poloidal magnetic field coil, so that a magnetic field is generated in the reaction chamber, and the main plasma current ring is pushed to move and compressed under the action of the magnetic field until a fusion condition is reached to generate a fusion reaction.

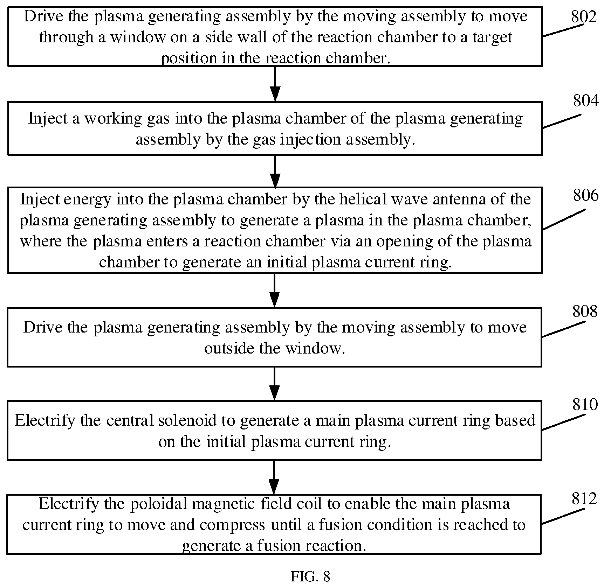

FIG. 8 is a flow chart of another nuclear fusion reaction method according to an embodiment of the present disclosure. The nuclear fusion reaction system to which the method is applied includes a plasma generating assembly, the plasma generating assembly may be a helical wave plasma generating source, and the nuclear fusion reaction system further includes a gas injection assembly. As shown in FIG. 8, the method may include the following steps 802 to 812.

In step 802, the plasma generating assembly is driven by the moving assembly to move through a window provided on a side wall of the reaction chamber to a target position in the reaction chamber.

For example, Step 802 may correspond to a state of the nuclear fusion reaction system shown in FIG. 4.

In step 804, working gas is injected into the plasma chamber of the plasma generating assembly by the gas injection assembly.

In step 806, energy is injected into the plasma chamber by the helical wave antenna of the plasma generating assembly to generate a plasma in the plasma chamber, and the plasma enters a reaction chamber via an opening of the plasma chamber to generate an initial plasma current ring.

For example, Step 806 may correspond to a state of the nuclear fusion reaction system shown in FIG. 5.

In step 808, the plasma generating assembly is driven by the moving assembly to move outside the window.

For example, Step 808 may correspond to a state of the nuclear fusion reaction system shown in FIG. 6.

In step 810, the central solenoid is electrified to generate a main plasma current ring based on the initial plasma current ring.

In step 812, the poloidal magnetic field coil is electrified to drive the main plasma current ring to move and compress until a fusion condition is reached to generate a fusion reaction.

It should be noted that each step in FIG. 8 is only an exemplary description, and it is not necessary that the steps are performed in the shown order or that the next step may be performed only after the previous step is performed. Taking Step 808 and Step 810 as examples, during the process that the moving assembly drives the plasma generating assembly to leave the reaction chamber, the central solenoid may be electrified as long as the plasma generating assembly leaves a plasma region, that is, the plasma generating assembly completely leaves the reaction chamber. In this case, it is ensured that the main plasma current ring is generated based on the initial plasma current ring as soon as possible, and it is also ensured that the central solenoid is electrified without causing damage to the plasma generating assembly.

To sum up, in the nuclear fusion reaction method according to the embodiment of the present disclosure, a plasma generating system is adopted to generate a plasma, where the moving assembly drives the plasma generating assembly to move in a target direction, and the plasma generating assembly emits a plasma after moving to a target position in the reaction chamber. In this way, the plasma is injected into the reaction chamber, so that a plasma ring is formed in the reaction chamber, and the nuclear fusion reaction chamber generates the plasma by ionizing gas without consuming extra energy, thereby reducing the difficulty of generating the plasma in the nuclear fusion reaction chamber, thus improving the effect of fusion reaction. In addition, after the plasma ring is generated, the moving assembly may drive the plasma generating assembly to move outside the window, so that an influence of the plasma generating assembly on the nuclear fusion reaction process can be avoided, and a damage of the nuclear fusion reaction process to the plasma generating assembly can be avoided.

The above describes specific embodiments of the present disclosure. Other embodiments are within the scope of the claims. In some cases, the acts or steps recited in the claims may be performed in a different order than those in the embodiments and still achieve desirable results. In addition, the processes depicted in the drawings do not necessarily require the particular order shown or the sequential order to achieve desirable results. Multitasking and parallel processing are also possible or may be advantageous in some embodiments.

Those skilled in the art should also understand that the embodiments described in the specification are all preferred embodiments, and the acts and modules involved are not necessarily required for the present disclosure. In the above embodiments, the description of each embodiment has its own emphasis, and for a part not described in detail in a certain embodiment, reference may be made to the relevant description of other embodiments.

The preferred embodiments disclosed above are only intended to assist in elucidating the present disclosure. The optional embodiments do not provide a detailed description of all the details, nor does it limit the scope of the present disclosure to the specific embodiments described. Obviously, many modifications and variations are possible in light of the teachings of the present disclosure. These embodiments are chosen and described in detail in order to better explain the principles of the present disclosure and the practical application, so that those skilled in the art may better understand and use the present disclosure.

## Claims

1. A plasma generating system, comprising:
a plasma generating assembly; and
a moving assembly, connected to the plasma generating assembly, wherein
the moving assembly is configured to drive the plasma generating assembly to move in a target direction; and
the plasma generating assembly is configured to emit a plasma after moving to the target position.

2. The plasma generating system according to claim 1, wherein the plasma generating assembly comprises a plasma chamber, and the moving assembly is connected to the plasma chamber; and
opposite ends of the plasma chamber are provided with openings, the plasma is generated in the plasma chamber and is outputted from the openings.

3. The plasma generating system according to claim 2, wherein the target direction intersects with an arrangement direction of the opposite ends.

4. The plasma generating system according to claim 2, wherein the plasma generating assembly further comprises a helical wave antenna; and
the helical wave antenna surrounds an inner space of the plasma chamber and is configured to inject energy into the plasma chamber to generate a plasma in the plasma chamber.

5. The plasma generating system according to any one of claims 2 to 4, further comprising:
a gas injection assembly, connected to the plasma chamber and configured to inject a working gas into the plasma chamber; wherein
the working gas, when being broken down by the energy, generates plasma in the plasma chamber.

6. The plasma generating system according to claim 4, further comprising:
a radio frequency wave source, connected to the helical wave antenna and configured to transmit radio frequency wave energy to the helical wave antenna, wherein
the helical wave antenna is configured to couple the radio frequency wave energy and inject the radio frequency wave energy into the plasma chamber.

7. The plasma generating system according to any one of claims 1 to 4, further comprising:
a control unit, configured to control the moving assembly to move along the target direction and control the plasma generating assembly to emit a plasma.

8. A nuclear fusion reaction system, comprising:
the plasma generating system according to any one of claims 1 to 7, wherein
the moving assembly in the plasma generating system is configured to drive the plasma generating assembly to move in the target direction; and
the plasma generating assembly is configured to inject a plasma into the reaction chamber after moving to the target position in the reaction chamber, to form a plasma ring in the reaction chamber to perform a fusion reaction.

9. The nuclear fusion reaction system according to claim 8, wherein a side wall of the reaction chamber is provided with a window,
the moving assembly in the plasma generating system is configured to drive the plasma generating assembly to switch between a first state and a second state; and
the plasma generating assembly is arranged outside the window in the first state and moves through the window to the target position in the reaction chamber in the second state.

10. The nuclear fusion reaction system according to claim 8 or 9, wherein the plasma generating assembly comprises:
a plasma chamber, and opposite ends of the plasma chamber are provided with openings; and
the reaction chamber is annular, in a case that the plasma chamber moves to the target position in the reaction chamber, an arrangement direction of the opposite ends intersects with a radial direction and an axial direction of the reaction chamber.

11. The nuclear fusion reaction system according to claim 8 or 9, wherein the reaction chamber is annular, and the target position is at middle region of the reaction chamber along a radial direction; and/or
the nuclear fusion reaction system comprises two plasma generating systems, and the two plasma generating systems are respectively arranged at a top and a bottom of the reaction chamber.

12. A nuclear fusion reaction method, applied to the nuclear fusion reaction system according to any one of claims 8 to 11, wherein the nuclear fusion reaction system further comprises a central solenoid and a poloidal magnetic field coil, and the method comprises:
driving, by the moving assembly, the plasma generating assembly to move to the target position in the reaction chamber along the target direction;
injecting a plasma into the reaction chamber by the plasma generating assembly to generate an initial plasma current ring in the reaction chamber;
electrifying the central solenoid to generate a main plasma current ring based on the initial plasma current ring; and
electrifying the poloidal magnetic field coil to drive the main plasma current ring to move and compress until a fusion condition is reached to generate a fusion reaction.

13. The method according to claim 12, wherein a side wall of the reaction chamber in the nuclear fusion reaction system is provided with a window, and
the driving, by the moving assembly, the plasma generating assembly to move to the target position in the reaction chamber along the target direction comprises:
driving, by the moving assembly, the plasma generating assembly to pass through the window to move to the target position in the reaction chamber, and
after generating the initial plasma current ring in the reaction chamber, the method further comprises:
driving, by the moving assembly, the plasma generating assembly to move outside the window.

14. The method according to claim 12 or 13, wherein the plasma generating assembly comprises: a plasma chamber and a helical wave antenna, and the nuclear fusion reaction system further comprises a gas injection assembly; and
the injecting a plasma into the reaction chamber by the plasma generating assembly comprises:
injecting a working gas into the plasma chamber by the gas injection assembly; and
injecting energy into the plasma chamber by the helical wave antenna to generate a plasma in the plasma chamber, wherein the plasma enters a reaction chamber via an opening of the plasma chamber.
